Europäisches Patentamt

**European Patent Office**

Office européen des brevets

(19)

(11) Veröffentlichungsnummer: **0 180 094**
**B1**

(12) # EUROPÄISCHE PATENTSCHRIFT

(45) Veröffentlichungstag der Patentschrift:
**08.02.89**

(51) Int. Cl.⁴: **B 01 D 59/50**

(21) Anmeldenummer: **85113146.6**

(22) Anmeldetag: **16.10.85**

(54) **Verfahren zur Isotopentrennung, insbesondere Uran-Isotopentrennung, Einrichtung zu einer Durchführung und Verwendung letzterer.**

(30) Priorität: **30.10.84 DE 3439650**

(43) Veröffentlichungstag der Anmeldung:
**07.05.86 Patentblatt 86/19**

(45) Bekanntmachung des Hinweises auf die Patenterteilung:
**08.02.89 Patentblatt 89/6**

(84) Benannte Vertragsstaaten:
**CH DE FR GB LI**

(56) Entgegenhaltungen:
**DE-A- 2 653 795**
**DE-C- 811 950**
**GB-A- 2 002 568**
**GB-A- 2 048 725**
**US-A- 2 422 564**

(73) Patentinhaber: **Siemens Aktiengesellschaft Berlin und München, Wittelsbacherplatz 2, D-8000 München 2 (DE)**

(72) Erfinder: **Gregorgius, Klaus, Dipl.-Phys., Dr.**
**Alex-Röder-Strasse 1, D-8524 Neunkirchen/Brand (DE)**
Erfinder: **Landgraf, Norbert, Dipl.-Ing. (FH), Am Dachsberg 24, D-8501 Rückersdorf (DE)**
Erfinder: **Schörner, Heinz, Dipl.-Ing. (FH), Laufer Weg 52, D-8505 Röthenbach (DE)**
Erfinder: **Vollmar, Horst-Eckart, Dr. Dipl.-Ing., Schwalbenweg 28, D-8521 Möhrendorf (DE)**

## Beschreibung

Die Erfindung bezieht sich auf ein Verfahren zum Trennen eines aus Isotopenverbindungen, insbesondere 235 $UF_6$ und 238 $UF_6$, bestehenden gasförmigen Gemisches durch selektive Anregung einer Isotopenverbindung des Gemisches mittels Laserdurchstrahlung, gemäss Oberbegriff des Anspruchs 1. Die Erfindung bezieht sich ferner auf eine Einrichtung zur Durchführung eines solchen Verfahrens gemäss Oberbegriff des Anspruchs 2.

Sowohl ein gattungsgemässes Verfahren als auch eine gattungsgemässe Einrichtung sind durch die DE-PS 2 447 762 bekannt. Als Reaktionspartner für die $UF_6$-Isotopenmischung wird in dem darin dargestellten Beispiel Wasserstoffbromid HBr in einem Mischungsverhältnis der Molekülkonzentrationen $UF_6$: HBr = 1 : 10 verwendet. Der Schlitzdüse und der Laser-Bestrahlungszone ist dabei ein Abschäler nachgeschaltet; die durch den Abschäler hindurchfliegende Mischung aus Reaktionsprodukten und Ausgangsstoffen kann durch fraktionierte Destillation getrennt werden. Die angereicherten Reaktionsprodukte, die insbesondere aus angereichertem $UF_5$ oder $UF_4$ bestehen, schlagen sich an einer gekühlten Auffangplatte nieder, die quer zur Achse des Strahlungskegels des Produktstromes innerhalb der Vakuumkammer angeordnet ist.

Gattungsgemäss ist auch die bekannte Vorrichtung nach der DE-PS 2 536 940, in welcher sich nähere Ausführungen zur photochemischen und chemischen Reaktion des Abtrennprozesses finden; ferner ist zum gattungsgemässen Stande der Technik zu nennen die DE-PS 2 805 958 mit einer besonderen Düsenausbildung. Zum Stande der Technik ist weiterhin zu nennen die DE-OS 2 653 795, worin die quantenphysikalischen Vorgänge der Anregung durch Photonen, der Photodissoziation und der Photoionisation im Zusammenhang mit der Uran-Isotopentrennung ausführlich erläutert sind. Der Produktstrom, welcher bevorzugt das Isotop 235 U enthält, wird bei den bekannten Vorrichtungen nach DE-PS 2 447 762, DE-PS 2 536 940 und DE-PS 2 805 958 an gekühlten Abscheideflächen durch Kondensation niedergeschlagen; in der DE-OS 2 635 795 finden sich zu diesem Verfahrensschritt keine näheren Ausführungen.

Ausgehend von dem gattungsgemässen Verfahren zum Trennen eines aus Isotopenverbindungen, insbesondere 235 $UF_6$ und 238 $UF_6$, bestehenden gasförmigen Gemisches, liegt der Erfindung die Aufgabe zugrunde, bei gegebener Pump- und Laser-Leistung die Ausbeute des an den Abscheideflächen niedergeschlagenen 235 $UF_n$ (oder allgemein: einer anderen gewünschten Isotopenverbindung) zu vergrössern. Erfindungsgemäss wird diese Aufgabe durch die im Kennzeichen des Anspruchs 1 angegebenen Merkmale gelöst. Aufgabe der Erfindung ist es auch, eine zur Durchführung des erfindungsgemässen Verfahrens geeignete und besonders vorteilhafte Einrichtung zu schaffen, welche – ausgehend von den gattungsgemässen Merkmalen des Anspruchs 2 – durch die im Kennzeichen des Anspruchs 2 angegebenen Merkmale gekennzeichnet ist. Vorteilhafte Weiterbildungen der Einrichtung nach dem Anspruch 2 sind in den Unteransprüchen 3 bis 8 angegeben.

Die mit der Erfindung erzielbaren Vorteile sind vor allem darin zu sehen, dass eine Ionisation des Produktstromes und die dazu erforderlichen hohen Laserlichtenergien nicht erforderlich sind; es genügt vielmehr, dass der Produktstrom in Staubform, enthaltend Aerosole bzw. Feststoffpartikel des abzutrennenden Isotops, vorliegt. In einem solchen Produktstrom induziert das sich jeweils zwischen der Spitzenelektrode und der Ringelektrode sich ausbildende starke, inhomogene elektrische Feld in den Partikeln oder Clustern jeweils Dipole, die dann in Richtung des Feldgradienten beschleunigt werden. Der Abtrennmechanismus ist damit physikalisch andersartig als derjenige bei herkömmlichen Elektrofiltern oder derjenige nach dem Ionenplasma-Abtrennverfahren (US-PS 4 107 524). Nach der Erfindung lassen sich sehr gute Abscheideeffekte erzielen; die Aerosolteilchen bzw. Feststoffpartikel scheiden sich an der (bevorzugt stabförmigen) Spitzenelektrode ab und nicht an der Ringelektrode, und dies auch, wenn man Spitzenelektrode und Ringelektrode in der Polarität vertauscht, was ein Beweis dafür ist, dass die Aerosolteilchen ungeladen sind, jedoch aufgrund der Dipolbildung unter Einfluss des inhomogenen elektrischen Feldes zur Spitzenelektrode wandern. Eine geeignete Spannung zwischen den Spitzen- und den Ringelektroden betrug 20 kV; der Spannungswert hängt ab von den Abmessungen, d.h. insbesondere dem Abstand der Spitzen- von ihrer Ringelektrode, derart, dass Spannungsüberschläge nicht auftreten dürfen.

Im folgenden wird anhand der Zeichnung, in welcher ein Ausführungsbeispiel mit zwei Varianten des Elektroden-Rasterfeldes dargestellt sind, das Verfahren nach der Erfindung einschliesslich seiner Durchführungseinrichtung noch näher erläutert. Darin zeigt in vereinfachter Darstellung, unter Fortlassung der für das Verständnis nicht erforderlichen Teile:

Fig. 1 perpektivisch eine schlitzförmige Entspannungsdüse mit nachgeschalteter Bestrahlungszone und Elektroden-Rasterfeld, wobei das Gehäuse und die Pumpen fortgelassen sind;

Fig. 2 schematisch entsprechend dem Strömungsverlauf nach Fig. 1 den Feed-Strom, den Produktstrom und den Tails-Strom;

Fig. 3 eine hohlzylindrische Gitterzellenstruktur im Ausschnitt als Abwandlung der hexagonalen Gitterstruktur nach Fig. 1 und

Fig. 4 einen Gitterelektroden-Grundkörper mit hexagonaler Gitterstruktur so wie in Fig. 1, wobei jedoch der nachgeschaltete Stiftelektroden-Haltekörper ebenfalls eine hexagonale Gitterstruktur aufweist, in dessen Gitterwand-Schnittpunkten die Stiftelektroden befestigt sind.

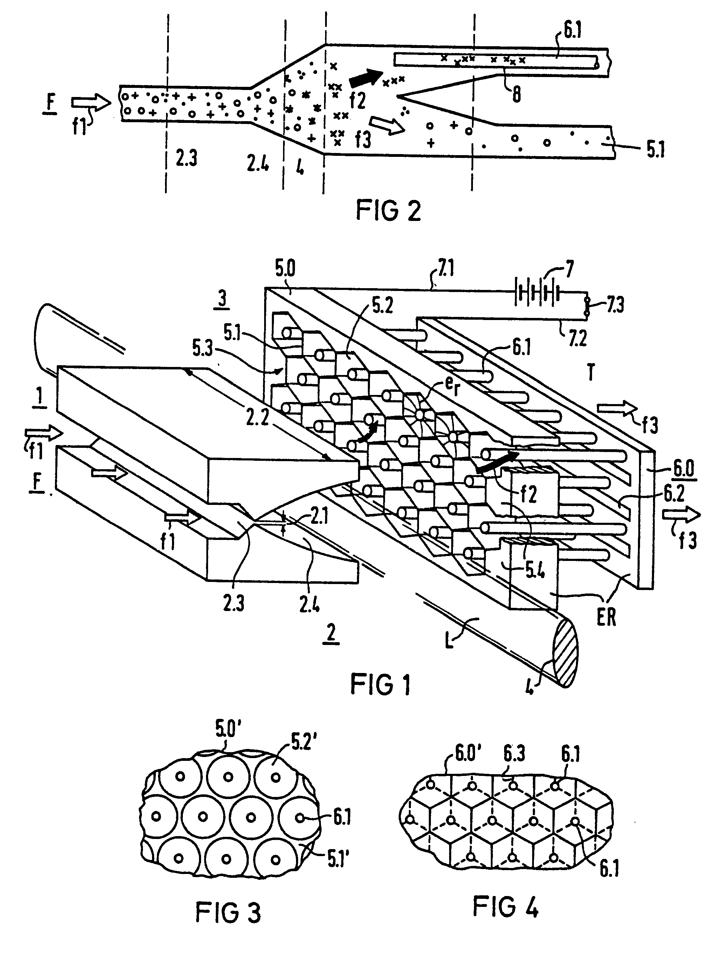

Bei der in Fig. 1 dargestellten Einrichtung ist der aus den beiden gasförmigen Isotopenverbindungen 235 $UF_6$ und 238 $UF_6$ und einem gasförmigen Reaktionspartner, z.B. HBr, bestehende Gemischstrom, auch als Feed-Strom bezeichnet, durch die Strömungspfeile f1 symbolisiert. Dieser Gemischstrom strömt von der Zuströmkammer 1, die der schlitzförmigen Entspannungsdüse 2 zur adiabatischen Entspannung des Gemischstromes vorgeschaltet ist, durch die genannte Düse 2 hindurch, deren Düsenspalt eine Weite von z.B. 0,01 mm hat und deren Düsenbreite 2.2 z.B. 50 bis 100 cm betragen kann. Die leistenförmigen Düse 2 ist eine Laval-Düse zur adiabatischen Entspannung des Gemischstromes unter Erzeugung einer Überschall-Strömung, wobei der konvergente, zum engsten Spalt 2.1 führende Düsenkanalabschnitt mit 2.3 und der divergente vom Spalt 2.1 in Strömungsrichtung sich erweiternde Düsenkanalabschnitt mit 2.4 bezeichnet ist. In Strömungsrichtung f1 des gasförmigen Gemisches F gesehen, mündet die schlitzförmige Entspannungsdüse 2 in eine Vakuumkammer 3 mit schlauchförmiger Bestrahlungszone 4, welch letztere achsparallel zu Richtung der Düsenschlitzbreite 2.2 von wenigstens einem Strahlenbündel L einer (nicht dargestellten) Lasereinrichtung durchsetzt wird. Der Querschnitt der Bestrahlungszone 4 wird mithin durch das Strahlenbündel L definiert, bei dem es sich auch um hin und hergehende, mehrfach gespiegelte Laserstrahlen handeln kann, was zur besseren Ausnutzung des Laserlichtes zweckmässig ist.

In der Zeichnung sind die tatsächlichen Verhältnisse etwa im Massstab 1 : 2 verkleinert dargestellt, woraus man erkennt, dass im Anschluss an die Bestrahlungszone 4 mit geringem Abstand zu dieser innerhalb der Vakuumkammer 3 das Elektroden-Rasterfeld ER angeordnet ist. Dieses besteht aus wenigstens einem plattenförmigen, durchbrochenen Gitterelektroden-Grundkörper 5.0, welcher eine Vielzahl von durch Zwischenwände 5.1 begrenzte und voneinander abgetrennte Gitterzellen 5.2 aufweist. Stromab des Gitterelektroden-Grundkörpers 5.0, im folgenden abgekürzt als Grundkörper bezeichnet, und mit Abstand zu diesem ist ein plattenförmiger Stiftelektroden-Haltekörper 6.0 mit einer Vielzahl von der den Gitterzellen 5.2 nach Anzahl und Anordnung entsprechenden Stiftelektroden 6.1 vorgesehen, die sich von ihrem Haltekörper 6.0 bis in die Gitterzellen 5.2 hinein erstrecken. Der Haltekörper 6.0 ist zur Bildung von Gasaustrittsöffnungen für den von $UF_n$ abgereicherten Gemischstrom T, auch als Tails-Strom bezeichnet und durch die Strömungspfeile f3 symbolisiert, über seine Grundfläche verteilt mit Durchbrechungen 6.2 versehen.

Als Material für den Körper der Düse 2, für den Grundkörper 5.0 und den Haltekörper 6.0 einschliesslich seiner Stiftelektroden 6.1 kommt ein fluorbeständiges Material, z.B. Reinstaluminium, in Frage. Die Stiftelektroden 6.1 sind in den Haltekörper 6.0 z.B. eingeschraubt oder in zylindrische Bohrungen bzw. Sacklochbohrungen eingepasst und gegebenenfalls durch einen Sicherheitsschweisspunkt gesichert. Die in Fig. 1 dargestellte hexagonale Gitterstruktur des Grundkörpers 5.0 ergibt eine sehr gute Materialausnutzung; die Stiftelektroden durchdringen die sechseckigen Gitterzellen zentrisch und enden etwa in Höhe der Stirnwand 5.3 des Grundkörpers 5.0. Eine weitergehende Verlängerung darüber hinaus bringt für den gewünschten inhomogenen Feldverlauf und den steilen Feldgradienten zur Dipolerzeugung keinen wesentlichen Gewinn. Die Gitterstruktur nach Fig. 1 ist also bienenwabenartig, wobei ein massiver, rahmenartiger Randbereich 5.4 eines ursprünglichen massiven Grundkörpers dadurch stehen geblieben ist, dass die Zellstruktur, z.B. nach dem EC-Verfahren, herausgearbeitet wurde.

Die Gasaustrittsöffnungen 6.2 im Haltekörper 6.0 sind im Beispiel nach Fig. 1 als parallel zur Richtung der Düsenschlitzbreite 2.2 zwischen den übereinander und mit Abstand zueinander angeordneten Reihen der Stiftelektroden 6.1 verlaufende Längsschlitze ausgeführt. Bei 7 ist eine Hochspannungsquelle mit Plusleiter 7.1 und Minusleiter 7.2 sowie Hochspannungsschalter 7.3 angedeutet, mittels welcher zwischen Grundkörper 5.0 und Haltekörper 6.0 eine Gleichspannung von z.B. 20 kV angelegt werden kann. Die Gitterstruktur des Grundkörpers 5.0 hat einen sehr kleinen Strömungswiderstand, weil die stehenbleibenden Gitterzellenwände sehr dünn gestaltet werden können, z.B. eine Wandstärke von 1 mm haben. Diese Wände können zur Zuströmung hin darüber hinaus noch angespitzt sein, um den Strömungswiderstand weiter zu verringern. Der Strömungswiderstand des Haltekörpers 6.0 kann demgemäss gleichfalls dadurch sehr klein gemacht werden, dass auch der Haltekörper 6.0 eine Gitterstruktur entsprechend dem Grundkörper 5.0 aufweist, jedoch – wie die vorteilhafte Ausführungsvariante nach Fig. 4 näher zeigt – mit seiner Gitterstruktur um eine halbe Gitterteilung gegenüber dem Grundkörper 5.0 versetzt angeordnet ist, wobei die Achsen der Stiftelektroden 6.1 durch die Schnittpunkte der gestrichelt dargestellten Gitterzellenwände 6.3 verlaufen. Man erkennt aus Fig. 4, dass dadurch die Gitterzellengrundflächen des Grundkörpers 5.0 jeweils durch die Trennwände 6.3 des nachgeschalteten Haltekörpers 6.0' in drei Rhombenfelder unterteilt werden, durch deren gemeinsame Mitte die Achsen der Stiftelektroden 6.1 in Richtung der Strömung verlaufen.

Das Ausführungsbeispiel für einen Grundkörper 5.0' nach Fig. 3 weist zylindrische Gitterzellen 5.2' des Grundkörpers 5.0' auf, so dass zwischen den einzelnen Gitterzellen 5.2' Gitterzwickel 5.1' stehen bleiben. Bei einer solchen Gitterausführung wäre es dann sinngemäss z.B. nach Fig. 4 auch zweckmässig, den nachgeschalteten Haltekörper mit einer gleichartigen zylindrischen Gitterzellenstruktur auszustatten, jedoch um eine halbe Gitterteilung quer zur Strömung zu versetzen, so dass die Stiftelektroden jeweils in dem stärksten Teil der Gitterzwickel befestigt werden können. Im übrigen kann das Zylinderzellengitter nach Fig. 3 auf der Zuströmseite an den Eintrittskanten seiner Gitterzellenwände ebenfalls angeschärft werden, um den Durchströmungswiderstand zu verringern.

Mit der Einrichtung nach Fig. 1 lässt sich nun das erfindungsgemässe Verfahren durchführen, das im folgenden unter Hinzuziehung von Fig. 2 näher erläutert wird. Das aus den gasförmigen Isotopenverbindungen 235 $UF_6$ und 238 $UF_6$ sowie aus dem Zusatzgas HBr bestehende Gasgemisch F strömt aus der Zuströmkammer 1 gemäss den Strömungspfeilen f1 durch die schlitzförmige Entspannungsdüse 2 (abgekürzt als Düse bezeichnet) hindurch, entspannt sich im Düsenkanalabschnitt 2.4 adiabatisch unter Abkühlung auf eine Temperatur unterhalb 100 K und strömt in diesem stark unterkühlten Zustand durch die einen z.B. ei- oder ellipsen-förmigen Querschnitt aufweisende Bestrahlungszone 4. Im Gasstrom F sind in Fig. 2 die Moleküle von HBr durch ein Kreuz, die Moleküle von 238 $UF_6$ durch einen kleinen Kreis und die Moleküle von 235 $UF_6$ durch Punkte symbolisiert. Die nicht dargestellte Lasereinrichtung ist derart fein abgestimmt, dass der Laserstrahl L selektiv nur die Moleküle des Isotops 235 $UF_6$ anregt. Sie kann insbesondere entweder nur mit einer Laserfrequenz strahlen oder aber mit wenigstens zwei unterschiedlichen Frequenzen, wie es im einzelnen z.B. in der DE-OS 2 653 795 beschrieben ist (Mehrphotonenverfahren). Insbesondere handelt es sich um gepulste Laser, bei welchen eine hinreichend energiereiche Strahlung von 1 Joule bis 10 Joule pro Laserpuls erzeugt werden kann. Der Gemischstrom F kann in Anpassung an die Frequenz der Laserpulse seinerseits dann auch gepulst sein, wie dies in der DE-AS 2 810 791 näher erläutert ist. Durch einen hinreichend energiereichen Laserstrahl werden die 235 $UF_6$-Moleküle derart angeregt, dass sie eine photochemische Reaktion mit dem Reaktionspartner HBr eingehen unter Bildung von Molekülen der allgemeinen Formel 235 $UF_n$, wobei n den Wert ≤ 5 hat. Im Gemischstrom F der Fig. 2 sind die angeregten 235 $UF_6$-Moleküle durch ein Sternchen und die 235 $UF_n$-Moleküle durch x-Zeichen symbolisiert oder durch mehrere x-Zeichen, wenn sie sich zu grösseren Molekülverbänden aneinandergelagert haben. Zusätzlich oder anstelle der selektiven Anregung der 235 $UF_6$-Moleküle können Laserfrequenz und -energie auch so bemessen sein, dass eine Photodissoziation auftritt. Die photodissoziierten 235 $UF_6$-Moleküle ergeben ebenfalls Moleküle der allgemeinen Formel 235 $UF_x$. Die entstehenden Molekülverbindungen der allgemeinen Formel 235 $UF_x$ sind unter den gegebenen Druck- und Temperaturverhältnissen Feststoffe; sie bilden den Produktstrom P in Form von Aerosolen bzw. Feststoffpartikeln und werden mit den übrigen Gemischanteilen des Gemischstromes F durch das elektrostatische Elektroden-Rasterfeld ER hindurchgeleitet, in dessen einzelnen Rasterelementen 5.2, 6.1 zwischen einer Spitzenelektrode 6.1 und einer diese mit Abstand umgebenden Ringelektrode (die identisch ist mit der Gitterzellenwand 5.2) jeweils ein inhomogenes elektrisches Teilfeld $e_r$ mit einem quer zur Strömungshauptrichtung (Pfeile f1, f3) verlaufenden Feldgradienten erzeugt wird. Anhand zweier Gitterzellen ist jeweils ein elektrisches Teilfeld $e_r$ in Fig. 1 angedeutet.

Durch das Elektroden-Rasterfeld ER mit seinen einzelnen Teilfeldern $e_r$ werden nun an den hindurchströmenden Feststoffpartikeln des Produktstromes P, siehe Strömungspfeile f2, Molekül-Dipole induziert, und diese Molekül-Dipole werden in Richtung der von den Spitzenelektroden 6.1 zu den diese umgebenden Ringelektroden gerichteten Feldgradienten beschleunigt sowie an der Oberfläche der Elektrodenspitzen 6.1 in Form eines Feststoffniederschlages 8 abgeschieden. Wenn eine gewisse Menge Feststoffniederschlag 8 an den Spitzenelektroden 6.1 abgeschieden ist, so kann durch Unterbrechung des Prozesses und Abschalten der Hochspannung (Öffnung des Schalters 7.3) der Haltekörper 6.0 mit seinen Spitzenelektroden über eine nicht dargestellte Schleuse od. dgl. zu einer Sammelstation transportiert werden, wo der Feststoffniederschlag von den Elektrodenspitzen entfernt und gesammelt wird. Es ist auch möglich, zur Aufrechterhaltung eines kontinuierlichen oder quasi-kontinuierlichen Verfahrens den Haltekörper 6.0 und den Grundkörper 5.0 als Teil eines radscheibenförmigen Körpers auszubilden, der sektorweise, wenn ausreichende Beladung mit 235 $UF_x$-Niederschlag in einem bestimmten Sektor vorliegt, weitergedreht wird, wobei diese Radscheibe sektorförmige Vollquerschnitt-Partien zwischen den Elektronen-Rasterfeld-Sektoren aufweist, an denen die Dichtungsleisten anliegen, mit denen die Radscheibe (nicht dargestellt) gegenüber der Vakuumkammer abgedichtet ist. Der sogenannte Tails-Strom (siehe Pfeil f3) enthält die flüchtigen Produkte HF und HBr ebenso wie das Isotop 238 $UF_6$ und kleinere (nicht abgeschiedene) Mengen des Isotops 235 $UF_6$. Dieser Strom T wird über nicht dargestellte Pumpeinrichtungen abgesaugt.

Das Verfahren und die Einrichtung nach der Erfindung lassen sich auch auf die Abtrennung der Isotope U 232 und U 236 aus wiederaufgearbeiteten Kernbrennstoffen anwenden, wobei diese Isotope vorher auffluoriert wurden oder aber in dieser Form vor ihrer Trennung bereits vorliegen. Eine weitere Anwendung wäre die Abtrennung des Isotops U 232 vom Isotop U 233 bei dem Thorium-Brüterbrennstoffkreislauf.

Gegenstand der Erfindung ist auch die Verwendung der Einrichtung nach einem der Ansprüche 2 bis 8, die vorstehend anhand der Ausführungsbeispiele nach den Figuren 1, 3 und 4 erläutert wurde, zur Abscheidung von Feinststäuben aus industriellen Prozessgasen, insbesondere Abgasen. Dabei kann z.B. eine Einrichtung nach der Erfindung mit einem Elektroden-Rasterfeld einem Elektrofilter, welches die gröberen Stäube abscheidet, zur Abscheidung der Feinststäube nachgeschaltet werden. Wenn in dem betreffenden industriellen Prozess lediglich Feinststäube (Aerosole) auftreten, so können eine oder mehrere hintereinander geschaltete Einrichtungen nach der Erfindung verwendet werden.

Was die Düsenform angeht, so zeigt das Ausführungsbeispiel nach Fig. 1 eine schlitzförmige Entspannungsdüse; bei geringeren Strömungsmengen und/oder dann, wenn eine adiabatische Entspannung nicht erforderlich ist, könnte auch eine Vielzahl von Lochdüsen Verwendung finden.

**Patentansprüche**

1. Verfahren zum Trennen eines aus Isotopenverbindungen, insbesondere 235 $UF_6$ und 238 $UF_6$, bestehenden gasförmigen Gemisches durch selektive Anregung einer Isotopenverbindung des Gemisches mittels Laserdurchstrahlung, insbesondere gepulster Laserdurchstrahlung, bestimmter Frequenz zur Erzeugung einer photoaktivierten chemischen Reaktion der einen Isotopenverbindung mit einem Reaktionspartner oder einer Photodissoziation der anzuregenden Isotopenverbindung auf der Basis des Mehrphotonenverfahrens und mit nachfolgender chemischer und/oder physikalischer Abtrennung der angeregten von der nicht angeregten Isotopenverbindung, wobei das gasförmige Gemisch der Isotopenverbindungen über wenigstens eine Entspannungsdüse adiabatisch in eine evakuierte Bestrahlungszone expandiert und dabei auf unter 100 K abgekühlt wird, und wobei infolge der selektiven Anregung der mit dem gewünschten Isotop angereicherte Produktstrom molekulare Verbindungen der allgemeinen Formel $UF_n$ ($n \leq 5$) enthält, die im Produktstrom kondensieren, sich zu Feststoffpartikeln vereinigen und an der Bestrahlungszone nachgeschalteten Abscheideflächen niedergeschlagen werden, dadurch gekennzeichnet,

– dass der Produktstrom durch ein elektrostatisches Elektroden-Rasterfeld (ER) hindurchgeleitet wird, in dessen einzelnen Rasterelementen zwischen einer Spitzenelektrode (6.1) und einer diese mit Abstand umgebenden Ringelektrode (5.1) jeweils ein inhomogenes elektrisches Teilfeld ($e_r$) mit einem quer zur Strömungsrichtung verlaufenden Feldgradienten erzeugt wird,

– dass durch das Elektroden-Rasterfeld (ER) an den hindurchströmenden Feststoffpartikeln Molekül-Dipole induziert und die Molekül-Dipole in Richtung des Feldgradienten beschleunigt sowie an den Spitzenelektroden (6.1) in Form eines Feststoffniederschlages (8) abgeschieden werden.

2. Einrichtung zur Durchführung des Verfahrens nach Anspruch 1, wobei in Strömungsrichtung (f1) des gasförmigen Gemisches (F) gesehen, die schlitzförmige Entspannungsdüse (2) in eine Vakuumkammer (3) mit Bestrahlungszone (4) mündet, welche Bestrahlungszone achsparallel zur Richtung der Düsenschlitzbreite (2.2) von wenigstens einem Strahlenbündel (L) einer Lasereinrichtung durchsetzt wird, dadurch gekennzeichnet, dass im Anschluss an die Bestrahlungszone (4) innerhalb der Vakuumkammer (3) das Elektroden-Rasterfeld (ER) angeordnet ist, bestehend aus

– wenigstens einem plattenförmigen durchbrochenen Gitterelektroden-Grundkörper (5.0) mit einer Vielzahl von durch Zwischenwände begrenzten Gitterzellen (5.2) und

– einem stromab des Gitterelektroden-Grundkörpers (5.0) mit Abstand zu diesem angeordneten plattenförmigen Stiftelektroden-Haltekörper (6.0) mit einer Vielzahl von der den Gitterzellen (5.2) nach Anzahl und Anordnung entsprechenden Stiftelektroden (6.1), die sich von ihrem Haltekörper (6.0) bis in die Gitterzellen (5.2) hinein erstrecken,

– wobei der Haltekörper (6.0) zur Bildung von Gasaustrittsöffnungen für den $UF_n$ abgereicherten Gemischstrom über seine Grundfläche verteilt mit Durchbrechungen (6.2) versehen ist.

3. Einrichtung nach Anspruch 2, gekennzeichnet durch eine hexagonale Gitterstruktur für den Gitterelektroden-Grundkörper.

4. Einrichtung nach Anspruch 2 oder 3, dadurch gekennzeichnet, dass aus einem massiven plattenförmigen Grundkörper die bienenwabenartige Gitterstruktur unter Belassen eines massiven, rahmenartigen Randbereiches (5.3) und der Zellwände (5.1) herausgearbeitet ist.

5. Einrichtung nach einem der Ansprüche 2 bis 4, dadurch gekennzeichnet, dass die Gasaustrittsöffnungen im Haltekörper (6.0) als parallel zur Richtung der Düsenschlitzbreite (2.2) zwischen den Stiftelektroden (6.1) verlaufende Längsschlitze (6.2) ausgeführt sind.

6. Einrichtung nach einem der Ansprüche 2 bis 4, dadurch gekennzeichnet, dass auch der Haltekörper (6.0') eine Gitterstruktur entsprechend dem Gitterelektroden-Grundkörper (5.0) aufweist, jedoch mit seiner Gitterstruktur um eine halbe Gitterteilung gegenüber dem Gitterelektroden-Grundkörper (5.0) versetzt angeordnet ist, wobei die Stiftelektroden-Achsen durch die Schnittpunkte der Gitterzellenwände (6.3) bzw. die Mitten der dazwischen stehenbleibenden Gitterzwickel laufen.

7. Einrichtung nach einem der Ansprüche 2, 3 oder 6, gekennzeichnet durch zylindrische Gitterzellen (5.2') des Gitterelektroden-Grundkörpers (5.0') und gegebenenfalls des Haltekörpers (6.0).

8. Einrichtung nach einem der Ansprüche 2 bis 7, dadurch gekennzeichnet, dass die Stiftelektroden (6.1) mit ihren Achsen jeweils auf die Mitte der zugehörigen Gitterzellen (5.2, 5.2') ausgerichtet sind.

9. Verwendung der Einrichtung nach einem der Ansprüche 2 bis 8 mit einer schlitzförmigen Entspannungsdüse oder einer Vielzahl von Lochdüsen zur Abscheidung von Feinststäuben aus industriellen Prozessgasen, insbesondere Abgasen.

**Claims**

1. A process for separating a gaseous mixture comprising isotope compounds, in particular 235 $UF_6$ and 238 $UF_6$, by selective excitation of an isotope compound of the mixture by means of laser radiation, in particular pulsed laser radiation, of a specific frequency to produce a photo-activated chemical reaction of the one isotope compound with a reaction partner or a photo-dissociation of the isotope compound to be excited on the basis of the multi-photon process and with subsequent chemical and/or physical separation of the excited compound from the non-excited isotope compounds, wherein the gaseous mixture of the isotope compounds is expanded adiabatically into an evacuated radiation zone through at least one expansion nozzle and is thereby cooled to below 100 K, and wherein as a result of the selective excitation the product stream enriched with the desired isotope contains molecular compounds of the general formula $UF_n$ ($n \leq 5$), which condense in the product stream, combine to form solid particles and are deposited on separating surfaces arranged after the radiation zone, characterised in that

– the product stream is directed through an electrostatic electrode grid system (ER) in the individual grid elements of which, between a point electrode (6.1) and an annular electrode (5.1) spaced from and surrounding it, respective inhomogeneous local electric fields ($e_r$) having a field gradient running transverse to the direction of flow are produced,

– through the electrode grid system (ER) molecular dipoles are induced on the solid particles flowing through and the molecular dipoles are accelerated in the direction of the field gradients and are separated on the point electrodes (6.1) in the form of a solid deposit.

2. A device for carrying out the process according to claim 1, wherein, viewed in the direction of flow (f1) of the gaseous mixture (F), the slit-shaped expansion nozzle (2) opens into a vacuum chamber (3) with a radiation zone (4), said radiation zone being traversed, with its axis parallel to the direction of the width of the slit of the nozzle (2.2), by at least one beam of radiation (L) from a laser device, characterised in that arranged immediately after the radiation zone (4) within the vacuum chamber (3) is the electrode grid system (ER) comprising

— at least one laminar, perforated lattice electrode foundation (5.0) having a plurality of lattice cells (5.2) bordered by intermediate walls and

— a laminar pin-electrode supporting body (6.0), arranged downstream and spaced from the lattice electrode foundation (5.0), having a plurality of pin-electrodes (6.1) corresponding in number and arrangement to the lattice cells (5.2) which extend from their supporting body (6.0) up into the lattice cells (5.2),

— the supporting body (6.0) being provided with perforations (6.2) distributed over its base to form gas outlet openings for the mixture stream depleted in $UF_n$.

3. A device according to claim 2, characterised in that the lattice electrode foundation has a hexagonal lattice structure.

4. A device according to claim 2 or claim 3, characterised in that from a massive, laminar foundation, the honeycomb-like lattice structure is formed by leaving a massive, frame-like peripheral region (5.3) and the cell walls (5.1).

5. A device according to any one of claims 2 to 4, characterised in that the gas outlet openings in the supporting body (6.0) are formed as longitudinal slits (6.2) running between the pin-electrodes (6.1) parallel to the direction of the width of the nozzle slit (2.2).

6. A device according to any one of claims 2 to 4, characterised in that the supporting body (6.0') also has a lattice structure corresponding to the lattice electrode foundation (5.0), but with its lattice structure displaced by half a lattice spacing relative to the lattice electrode foundation, with the pin-electrode axes running through the intersections of the lattice cell walls (6.3) or the centres of the lattice gussets which are left standing between them.

7. A device according to any one of claims 2, 3 or 6, characterised in that the lattice cells (5.2') of the lattice electrode foundation (5.0'), and possibly those of the supporting body (6.0) are cylindrical.

8. A device according to any one of claims 2 to 7, characterised in that the pin electrodes (6.1) are aligned with their axes in the centre of the respective lattice cells (5.2, 5.2').

9. Use of the device according to any one of claims 2 to 8 having a slit-shaped expansion nozzle or a plurality of hole-type nozzles to separate very fine dust from industrial process gases, in particular exhaust gases.

**Revendications**

1. Procédé de séparation d'un mélange gazeux d'isotope, notamment de U 235 $F_6$ et de U 238 $F_6$, par excitation sélective d'un isotope du mélange au moyen d'une irradiation laser, notamment d'une irradiation laser pulsée, d'une fréquence déterminée, pour produire une réaction chimique photoactivée de l'un des isotopes sur un partenaire de réaction ou une photodissociation de l'isotope excité sur la base du processus à multiphotons et avec séparation chimique et/ou physique ultérieure de l'isotope excité de celui qui ne l'est pas, le mélange gazeux des isotopes étant expansé adiabatiquement dans une zone d'irradiation mise sous vide par au moins une buse de détente et étant ainsi refroidi en dessous de 100 K et en raison de l'excitation sélective le courant de produit enrichi en l'isotope souhaité contenant des composés moléculaires de formule générale $UF_n$ (n ≤ 5) qui se condensent dans le courant de produit, qui se réunissent en particules de matière solide et qui se déposent sur des surfaces de dépôt en aval de la zone d'irradiation, caractérisé en ce qu'il consiste

— à faire passer le courant de produit dans un champ électrostatique réticulé à électrodes (ER), dans les éléments de réseau duquel est produit, entre une électrode en forme de tige (6.1) et une électrode annulaire (5.1) entourant celle-ci à distance, un champ partiel (ER) électrique qui n'est pas homogène et qui a un gradient de champ s'étendant transversalement au sens de l'écoulement,

— à induire par le champ réticulé à électrodes (ER), dans les particules de matière solide qui passent, des dipôles moléculaires et à accélérer les dipôles moléculaires dans le sens du gradient de champ, ainsi qu'à les déposer sur les électrodes à tige (6.1) sous la forme d'un dépôt de matière solide (8).

2. Dispositif pour exécuter le procédé suivant la revendication 1, dans lequel, considéré dans le sens d'écoulement (f1) du mélange (F) gazeux, la buse de détente (2) en forme de fente débouche dans une chambre sous vide (3) ayant une zone d'exposition (4), laquelle zone d'expositin est traversée parallèlement à l'axe dans la direction de la largeur (2.2) de la fente de buse par au moins un faisceau de rayonnement (L) d'un dispositif laser, caractérisé en ce qu'à la suite de la zone d'exposition (4) est disposé, à l'intérieur de la chambre sous vide (3), le champ réticulé à électrodes (ER) constitué

— d'au moins une pièce de base d'électrodes de réseau (5.0) en forme de plaque interrompue et ayant un grand nombre de cellules de réseau délimitées par des parois intermédiaires (5.2) et

— d'une pièce de fixation d'électrodes en forme de tige (6.0), qui est en forme de plaque et qui est montée en aval de la pièce de base d'électrodes de réseau (5.0) et à distance de celle-ci avec un grand nombre d'électrodes en forme de tige (6.1) correspondant en nombre et en position aux cellules du réseau (5.2) et s'étendant de leur pièce de fixation (6.0) jusque dans les cellules du réseau (5.2),

— la pièce de fixation (6.0) étant munie, pour former des orifices de sortie du gaz, destinés au mélange gazeux appauvri en $UF_n$, de passages (6.2) répartis sur sa surface de base.

3. Dispositif suivant la revendication 2, caractérisé par une structure hexagonale de réseau pour la pièce de base d'électrodes de réseau.

4. Dispositif selon la revendication 2 ou 3, caractérisé en ce que la structure réticulée de type à nid d'abeilles est usinée dans une pièce de base pleine en forme de plaque, en laissant une partie marginale (5.3) pleine en forme de cadre et les parois des cellules (5.1).

5. Dispositif selon l'une des revendications 2 à 4, caractérisé en ce que les orifices de sortie du gaz ménagés dans la pièce de fixation (6.0) sont ménagés parallèlement à la direction de la largeur de la fente de la buse (2.2) entre les fentes longitudinales (6.2) s'étendant entre les électrodes à broches (6.1).

6. Dispositif selon l'une des revendications 2 à 4, caractérisé en ce que la pièce de fixation (6.0') aussi a une structure en réseau correspondant à la pièce de base d'électrodes; de réseau (5.0), mais sa structure de réseau est décalée d'un demi-pas de réseau par rapport à la pièce de base d'électrodes à réseau (5.0), les axes des électrodes en forme de tige passant par les points d'intersection des parois des cellules de réseau (6.3) et par les milieux des parties pleines du réseau subsistant entre elles.

7. Dispositif selon l'une des revendications 2, 3 ou 6, caractérisé par des cellules de réseau (5.2') cylindriques de la pièce de base à électrodes de réseau (5.0') et le cas échéant, de la pièce de fixation (6.0).

8. Dispositif selon l'une des revendications 2 à 7, caractérisé en ce que les axes des électrodes en forme de tige (6.1) sont alignés sur les milieux des cellules de réseau (5.2, 5.2') correspondantes.

9. Utilisation du dispositif suivant l'une des revendications 2 à 8, avec une buse de détente en forme de fente ou un grand nombre de buses à trous, pour la séparation de poussières très fines de gaz industriels de processus, notamment d'effluents gazeux.

FIG 2

FIG 1

FIG 3

FIG 4